Europäisches Patentamt

**European Patent Office**

**Office européen des brevets**

(11) Veröffentlichungsnummer: **0 107 114**
A2

(12) **EUROPÄISCHE PATENTANMELDUNG**

(21) Anmeldenummer: **83109824.9**

(22) Anmeldetag: **30.09.83**

(51) Int. Cl.³: **B 01 D 21/00,** B 01 D 17/02

(30) Priorität: **25.10.82 DE 3239470**

(43) Veröffentlichungstag der Anmeldung: **02.05.84**
**Patentblatt 84/18**

(84) Benannte Vertragsstaaten: **AT BE CH FR GB IT LI LU NL SE**

(71) Anmelder: **Preussag AG, Leibnizufer 9, D-3000 Hannover 1 (DE)**

(72) Erfinder: **Wagner, Axel, Hammer-Stein-Strasse 2, D-3000 Hannover (DE)**

(74) Vertreter: **Brose, D. Karl et al, PATENTANWÄLTE BROSE & BROSE Wiener Strasse 2, D-8023 München-Pullach (DE)**

(54) **Vorrichtung zum Aufbereiten insbesondere von Abwasser, Brauchwasser und Trinkwasser.**

(57) In einer Vorrichtung zur Flüssigkeitsaufbereitung, insbesondere zur Abwasser-, Brauchwasser- oder Trinkwasseraufbereitung, beispielsweise in einem Parallelplattenseparator, in der die aufzubereitende Flüssigkeit innerhalb eines Behälters an im Inneren des Behälters angeordneten Flächen vorbeigeführt wird, an denen eine Mischung, Reifung, Beruhigung oder Sedimentation der Flüssigkeit erfolgt, werden die Flächen von flexiblen Folien (1) gebildet, die innerhalb des Behälters federnd verspannt sind.

0107114

Preussag Aktiengesellschaft Berlin - Hannover,
Leibnizufer 9, D-3000 Hannover 1

Vorrichtung zum Aufbereiten insbesondere von
Abwasser , Brauchwasser  und Trinkwasser.

## BESCHREIBUNG

Die Erfindung betrifft eine Vorrichtung zur Flüssigkeitsaufbereitung, insbesondere zur Abwasser-, Brauchwasser- und
Trinkwasseraufbereitung, wobei die aufzubereitende Flüssigkeit innerhalb eines Behälters an im Inneren des Behälters
angeordneten Flächen vorbeigeführt wird, an denen eine
Mischung, Reifung, Beruhigung, Sedimentation oder dergleichen der Flüssigkeit erfolgt.

Bei solchen Vorrichtungen zur Flüssigkeitsaufbereitung
handelt es sich um die üblichen Aufbereitungsstufen, die
das aufzubereitende Wasser durchläuft. Die einzelnen Behälter werden hierbei von mehr oder wenigen großen Becken gebildet, welche entweder aus Metall gefertigt sein können
oder auch als Betonbecken ausgebildet sein können. Innerhalb der einzelnen Becken werden die Verfahrensstufen der
Misch-, Flockungs- oder Absetztechnik angewandt, um eine
Mischung, Reifung, Beruhigung oder Sedimentation der aufzubereitenden Flüssigkeit herbeizuführen.

Zum Zwecke der Sedimentation können beispielsweise Schräg-
bzw. Parallelplattenseparatoren Verwendung finden, in denen
eine Sedimentation durch im Becken angeordnete parallele
Platten gefördert werden soll.

Allen vorgenannten Aufbereitungsvorrichtungen ist gemeinsam, daß innerhalb des Beckens zusätzliche Flächen angeordnet sind, die zur strömungstechnischen Gestaltung des Misch- und Flockenbildungsraumes, als Leitkörper in Beruhigungszonen oder als Leit-, Trenn- bzw. Absetzfläche im Falle von Plattenseparatoren dienen.

Die vorgenannten zusätzlichen Flächen werden beim Stand der Technik von starren Platten gebildet, die entweder an der Behälterwand angeschweißt sind oder in einer relativ aufwendigen Rahmenkonstruktion gehalten werden. Aufgrund des erheblichen Gewichts der Konstruktion gemäß dem Stand der Technik wird häufig auf die relativ aufwendige Sektionsbauweise zurückgegriffen. Um handhabbare Einheiten zu erhalten, werden die Platten, insbesondere im Falle der Schräg- bzw. Parallelplattenseparatoren, in Plattenpaketen zusammengefaßt und über Tragkonstruktionen am bzw. im Becken befestigt.

Die bekannten Konstruktionen weisen daher den Nachteil auf, daß sie sehr schwer und daher nur schwierig zu handhaben sind. Für ihre Montage ist daher in der Regel ein schweres Montagegerät erforderlich.

Wenn die Platten direkt in den Metallbehälter eingeschweißt werden, besteht zudem die Gefahr, daß sich der Behälter beim Einschweißen verzieht und nicht mehr maßhaltig ist.

Die gemäß dem Stande der Technik voluminösen und massiven Platten beanspruchen überdies innerhalb des Behälters relativ viel Raum, was den Bestrebungen, kleine Einheiten mit jeweils hoher Effektivität zu erhalten, zuwiderläuft.

Der vorliegenden Erfindung liegt daher die Aufgabe zugrunde, die vorgenannten Nachteile gemäß dem Stand der Technik zu vermeiden und insbesondere eine Anordnung zu schaffen, welche bei einer Leistungssteigerung der Vorrichtung gleichzeitig einen einfacheren konstruktiven Aufbau sowie eine Montagevereinfachung ermöglicht.

Diese Aufgabe wird erfindungsgemäß dadurch gelöst, daß die Flächen von dünnen Flächenelementen gebildet werden, die im Behälter einzeln lösbar befestigt sind.

Durch Ersetzen der massiven Metallplatten bzw. Plattenpakete gemäß dem Stand der Technik durch dünne, einzelbefestigbare Flächenelemente wird eine Reihe von erheblichen Vorteilen erzielt: Zunächst ist ersichtlich, daß die dünnen, relativ leichten Flächenelemente eine aufwendige Rahmenkonstruktion entbehrlich machen, wodurch die Vorrichtung konstruktiv bereits deutlich vereinfacht wird. Das einzelne Befestigen der Flächenelemente im Behälter bringt erhebliche Montageerleichterungen mit sich, nachdem nunmehr ein Flächenelement nach dem anderen in den Behälter ein- bzw. aus diesem ausgebaut werden kann. Schweres Montagegerät hierfür ist nicht mehr erforderlich.

Ein ganz besonderer Vorteil der Erfindung ist darin zu sehen, daß sie gegenüber dem Stand der Technik bei gleicher Abmessung des Behälters eine Leistungssteigerung bzw. bei gleicher Leistung eine Reduzierung des Bauvolumens der Aufbereitungsvorrichtung mit sich bringt, nachdem die massiven, ein relativ großes Volumen verdrängenden Platten gemäß dem Stand der Technik durch die dünnen, nur wenig Volumen verdrängenden Flächenelemente gemäß der Erfindung ersetzt werden. Insbesondere im Falle von Schräg- bzw. Parallelplattenseparatoren ist durch die Erfindung eine wesentlich höhere Packtungsdichte der Flächenelemente möglich, wodurch sich nach den jeweiligen Erfordernissen entweder eine Leistungssteigerung des Systems oder, bei gleicher Leistung, eine Verkleinerung der Anlage ergibt.

Gemäß weiteren Merkmalen der Erfindung sind die Flächenelemente vorzugsweise als flexible Folien ausgebildet, wobei als Folien je nach Anwendungsfall entweder Metallfolien, beispielsweise aus Edelstahl oder Aluminium oder auch Kunststoff-Folien, beispielsweise PVC-Folien Verwendung finden können, wobei die Kunststoff-Folien gegebenenfalls eine Textil- oder Metallgewebeverstärkung oder eine Glasfaserverstärkung aufweisen können. Für die Anwendung der Erfindung zur Trinkwasseraufbereitung wurden Werkstoffkombinationen geprüft, die den Anforderungen der "KTW-Empfehlungen" (gesundheitliche Beurteilung von Kunststoffen und anderen nichtmetallischen Werkstoffen im Rahmen des Lebensmittel- und Bedarfsgegenstände-Gesetzes für den Trinkwasserbereich; 1. Mitteilung Bundesgesetzblatt, 20. Jahrgang vom 7.1.1977, Nr. 1, Seite 10-13) entsprechen. Gegebenenfalls können auch andere, durch geeignete Materialien beschichtete Werkstoffe Verwendung finden. Die verwendeten Materialien können in der Regel in Kalibrierstraßen gefertigt werden und zeichnen sich durch eine hohe Oberflächengüte aus.

Die folienartigen Flächenelemente sind ohne Spaltmaß stapelbar oder können gegebenenfalls auch in zusammengerollter Form transportiert werden. In jedem Fall wird aufgrund der folienartigen Flächenelemente gegenüber dem Stand der Technik das Transportvolumen und das Transportgewicht erheblich reduziert.

Besonders vorteilhaft ist es, wenn die Flächenelemente gemäß weiteren Erfindungsmerkmalen im Behälter verspannt, insbesondere federnd verspannt sind. Hierbei ergibt sich eine einfache Montage der Flächenelemente auch bei engen Montagetoleranzen. Zudem werden die jeweils vorhandenen Bautoleranzen auf einfachste Weise ausgeglichen. Aufgrund der federnden Verspannung der Flächenelemente werden weiterhin statische, dynamische und thermische Größen, die zur Maßänderung der Flächenelemente führen und beim Stand der Technik zu erheblichen Spannungen und hiermit zusammenhängenden Schwierigkeiten führen, auf einfachste Weise kompensiert.

Als gegenüber dem Stand der Technik erheblich vereinfacht gestaltet sich das mechanische Abreinigen verschmutzter Systeme im Falle der erfindungsgemäß federnd verspannten Folien, da hierzu das Einleiten von Schwingungen in die Konstruktion genügt (beispielsweise mittels eines Fibrationsschlittens). Hierdurch werden die gegenüber dem Stand der Technik zum Reinigen des Systems erforderlichen Ausfallzeiten deutlich herabgesetzt, was zur Steigerung der Wirtschaftlichkeit des Systems beiträgt.

Es ist ersichtlich, daß die erfindungsgemäßen Flächenelemente sowohl horizontal als auch geneigt oder vertikal in Becken bekannter geometrischer Gestalt eingebaut werden können. Weiterhin können die folienartigen Flächenelemente sowohl in ihrer eigenen Ebene als auch gegebenenfalls senkrecht hierzu bzw. in einem bestimmten Winkel zu ihrer Ebene verspannt werden.

Gegenüber den Rahmenkonstruktionen gemäß dem Stand der Technik wird der erforderliche Raumbedarf für Halterungen der folienartigen Flächenelemente auf ein Minimum reduziert. Die Halterungen können entweder direkt an der Behälterwandung angeschweißt oder angeschraubt werden oder im Falle von Betonbecken aufgedübelt oder gleich in die Schalung mit eingelegt werden. Gegebenenfalls kann auch eine die Halterungen tragende Rahmenkonstruktion vorgesehen sein, die jedoch gegenüber dem bekannten Stand der Technik wesentlich leichter sein kann.

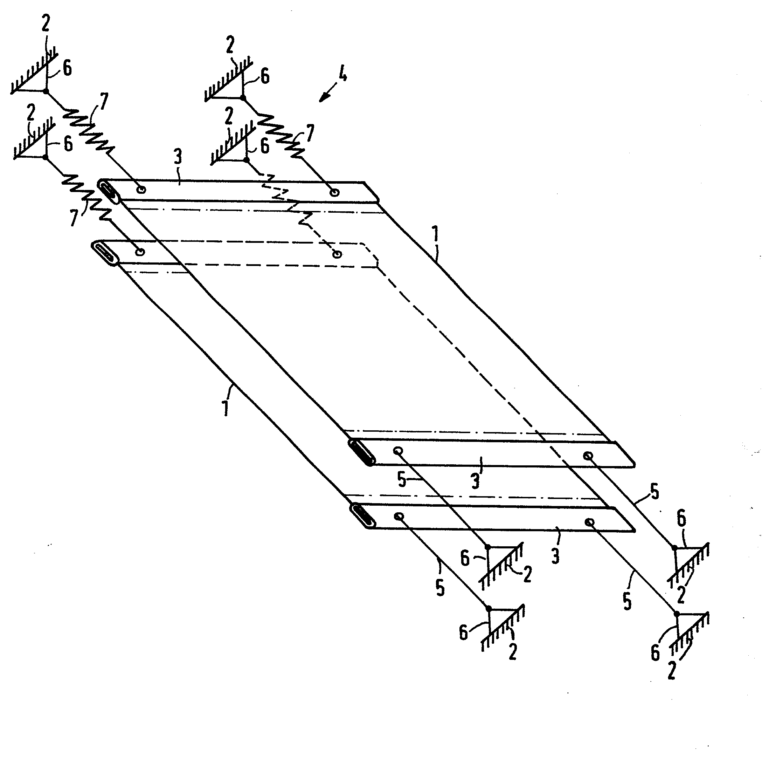

Im folgenden wird ein Ausführungsbeispiel der Erfindung anhand der Zeichnung näher erläutert. Die einzige Figur zeigt in schematischer Darstellung zwei parallele, federnd verspannte folienartige Flächenelemente gemäß der vorliegenden Erfindung.

Die dargestellten Flächenelemente können beispielsweise in Schräg- oder Parallelplattenseparatoren (gegebenenfalls mit Eindicker) Anwendung finden, wobei selbstverständlich in der Regel mehr als zwei parallele Flächenelemente vorgesehen sind. Diese Plattenseparatoren können je nach Konstruktionsprinzip nach dem Gegenstrom-, Gleich- oder Querstromverfahren betrieben werden, wobei die dargestellten, zusätzlichen Flächenelemente dazu dienen, gegenüber einem konventionellen Absetzbecken die Absetzfläche zu vergrößern.

Die dargestellten Flächenelemente umfassen jeweils eine flexible, rechteckige Folie 1, die zwischen Außenwände 2 eines im übrigen nicht dargestellen Behälters gespannt sind. An zwei gegenüberliegenden Endbereichen der Folie 1 ist die Folie mit Spannleisten 3 versehen, welche gewährleisten, daß die über die im allgemeinen mit der Bezugsziffer 4 bezeichneten Halteelemente in die Folie 1 eingeleiteten Zugkräfte gleichmäßig über die gesamte Fläche der Folie 1 verteilt werden. Die Spannleisten 3 können beispielsweise in die Folie 1 eingeschweißt oder eingeklebt sein oder aber in Form von folienklemmenden Profilleisten ausgebildet sein.

Die Halteelemente 4 sind im Bereich der untenliegenden Enden der Folie 1 als Zugstäbe 5 ausgebildet, die an ihrem einen Ende jeweils an einem Endbereich der Spannleiste 3 und an ihrem anderen Ende an jeweils einem Halter 6, der seinerseits an der Behälterwandung 2 oder an einem entsprechenden Rahmenteil befestigt ist, angelenkt sind.

Die jeweils oberen Halteelemente sind als federnde Vorspannelemente 7 ausgebildet, die wiederum jeweils an ihrem einen Ende an dem oberen Zugstab 3 und an ihrem entgegengesetzten Ende an den Haltern 6 angelenkt sind. Die Vorspannelemente 7 können in der Praxis Zug- oder Druckfedern umfassen, und die Spannkraft dieser Federelemente ist zweckmäßigerweise einstellbar.

Die die Widerlager bildenden Halter 6 sind so ausgebildet, daß sie die Vorspannelemente 7 bzw. die Zugstäbe 5 gemäß dem gewählten Folienneigungswinkel führen oder sich unter der Vorspannkraft dem gwählten Neigungswinkel selbsttätig anpassen.

6220-2

0107114

Patentanwälte Brose & Partner
Dipl. Ing. Karl A. Brose †
Dipl. Ing. D. Karl Brose
Dipl. Phys. Michael Resch
D-8023 München-Pullach
Wiener Str. 2, Tel. Mchn. 7933071, 7933072

30. September 1983

Anmelderin: Preussag Aktiengesellschaft Berlin - Hannover,
Leibnizufer 9, D-3000 Hannover 1

## PATENTANSPRÜCHE

1. Vorrichtung zur Flüssigkeitsaufbereitung, insbesondere zur Abwasser-, Brauchwasser- oder Trinkwasseraufbereitung, wobei die aufzubereitende Flüssigkeit innerhalb eines Behälters an im Inneren des Behälters angeordneten Flächen vorbeigeführt wird, an denen eine Mischung, Reifung, Beruhigung, Sedimentation oder dergleichen der Flüssigkeit erfolgt, d a d u r c h   g e k e n n z e i c h n e t , daß die Flächen von dünnen Flächenelementen (1) gebildet werden, die im Behälter (2) einzeln befestigt sind.

2. Vorrichtung nach Anspruch 1, dadurch gekennzeichnet, daß die Flächenelemente als flexible Folien (1) ausgebildet sind.

3. Vorrichtung nach Anspruch 2, dadurch gekennzeichnet, daß als Flächenelemente (1) Metallfolien Verwendung finden.

4. Vorrichtung nach Anspruch 2, dadurch gekennzeichnet, daß als Flächenelemente (1) Kunststoff-Folien Verwendung finden.

5. Vorrichtung nach Anspruch 4, dadurch gekennzeichnet, daß die Kunststoff-Folien (1) eine Gewebeverstärkung aufweisen.

6. Vorrichtung nach Anspruch 4, dadurch gekennzeichnet, daß die Kunststoff-Folien (1) eine Glasfaserverstärkung aufweisen.

7. Vorrichtung nach einem der vorhergehenden Ansprüche, dadurch gekennzeichnet, daß die Flächenelemente (1) im Behälter (2) verspannt sind.

8. Vorrichtung nach Anspruch 7, dadurch gekennzeichnet, daß die Flächenelemente (1) im Behälter (2) federnd verspannt sind.

0107114